**Europäisches Patentamt**

**European Patent Office**

**Office européen des brevets**

(11) Veröffentlichungsnummer: **0 285 746 B1**

# EUROPÄISCHE PATENTSCHRIFT

(45) Veröffentlichungstag der Patentschrift: **29.01.92**

(21) Anmeldenummer: **88100449.3**

(22) Anmeldetag: **28.02.86**

(51) Int. Cl.⁵: **G05B 21/00**, B23K 7/00,
G05B 19/42, G05B 19/19

(60) Veröffentlichungsnummer der früheren
Anmeldung nach Art. 76 EPÜ: **0 195 289**

(54) **Einrichtung zur Festlegung von Schneidpositionen für Profile, wie Wulstprofile, I-Profile und ähnliche stabförmige Werkstücke.**

(30) Priorität: **22.03.85 DE 3510381**

(43) Veröffentlichungstag der Anmeldung:
**12.10.88 Patentblatt 88/41**

(45) Bekanntmachung des Hinweises auf die
Patenterteilung:
**29.01.92 Patentblatt 92/05**

(84) Benannte Vertragsstaaten:
**AT BE CH FR GB IT LI NL SE**

(56) Entgegenhaltungen:
**DE-A- 3 208 412**
**DE-A- 3 235 027**
**DE-B- 2 742 072**
**DE-C- 3 331 844**
**US-A- 3 842 330**

(73) Patentinhaber: **Oxytechnik Ges. für Systemtechnik mbH
Frankfurter Strasse 10
W-6236 Eschborn 1(DE)**

(72) Erfinder: **Lentz,Gerhard
In der Bitterwiese 13
W-6272 Niedernhausen 3(DE)**

(74) Vertreter: **Roesner, Werner
MESSER GRIESHEIM GmbH Patentabteilung
Lärchenstrasse 137 Postfach 83 00 48
W-6230 Frankfurt/Main 83(DE)**

## Beschreibung

Die Erfindung betrifft eine Einrichtung zur Festlegung von Schneidpositionen für Profile, wie Wulstprofile, I-Profile und ähnliche stabförmige Werkstücke in einer Profilschneidstation mit einer Vorrichtung zum Positionieren und Fördern von Profilen , die einen Rollengang aufweist mit einer Steuerung und einem Schneidbrenner.

Es ist bekannt, die auf Längsförderern, beispielsweise Rollengängen, angeordneten Profile über angetriebene Rollen in den Arbeitsbereich eines Schneidbrenners zu fördern (DE-A1-31 36 394). Die abzuschneidende Profillänge kann durch einen in Förderrichtung nach dem Schneidbrenner angeordneten Anschlag vorgegeben werden (DD-C1-94550). Dabei muß die in der Nähe der Schneidstation angeordnete Anschlagseite immer sauber, d. h. frei von Schneid- und Schlackespritzern sein, was beim Brennschneiden einen erheblichen Kontroll- und Reinigungsaufwand erfordert. Die Anschlagseite muß aufgrund möglicher Schrägschnitte in ihren Abmessungen der größten Profilbreite entsprechen, damit die beispielsweise dem freien Ende der Anschlagseite zugeordnete Profilspitze noch positioniert werden kann.

Weiterhin ist es bekannt, die Profillänge über Vorschubmeßeinrichtungen, welche mit einer programmierbaren Steuereinrichtung verbunden sind, vorzugeben (DE-C1-33 31 844, DE-B2-27 42 072).

Dabei werden die Profile über die Reibung zwischen ihren Umfangsflächen und den angetriebenen Rollen bewegt. Bei einer Überschreitung der vom Rauhigkeitsgrad der Oberfläche, ihrem Zustand (geölt bis trocken) und der Flächenpressung abhängigen Reibungskraft ist eine Bewegung zwischen den Profilen und den angetriebenen Rollen und damit eine ungenaue Positionierung möglich.

Dies kann insbesondere bei Profilen mit geringen Abmessungen und geringem Gewicht aufgrund einer geringeren Flächenpressung auftreten. Da die Reibungskräfte sich mit der Länge des Profiles ändern, können keine statischen Positionierbedingungen vorgegeben werden.

Der Erfindung liegt die Aufgabe zugrunde, ein Profil in einer Profilschneidanlage genau zu positionieren.

Diese Aufgabe wird erfindungsgemäß dadurch gelöst, daß die Vorrichtung ein Meßwagen ist, der linear entlang ihres Längsförderweges verfahrbar ist und das Profil in seiner X-Richtung auf einem Rollengang in Bezug auf die Profilschneidstation bewegt und positioniert.

Die mit der Erfindung erzielten Vorteile bestehen insbesondere darin, daß die Nachteile des Standes der Technik vermieden werden. Die Profile stehen nur über ihre Stirnseiten mit dem Meßwagen in Verbindung. Damit ist eine lineare Verschiebung der Profile entlang des Längsförderweges auf den Rollen des Rollenganges über die von der Schneidstation entferteste Stelle des Profiles möglich. Dabei können die Profile mit dem Meßwagen in ihrer relativen Lage zur Meßlinie A-A gehalten werden. Eine Bewegung zwischen dem Meßwagen und den Profilen in Vorschubrichtung kann nicht erfolgen.

Ein Ausführungsbeispiel der Erfindung ist in der Zeichnung dargestellt und wird im folgenden näher beschrieben.

Es zeigen

Fig. 1    eine Schemazeichnung einer Profilschneidstation;

Fig. 2    eine schematische Draufsicht der Profilschneideinrichtung mit der Einrichtung nach der Erfindung.

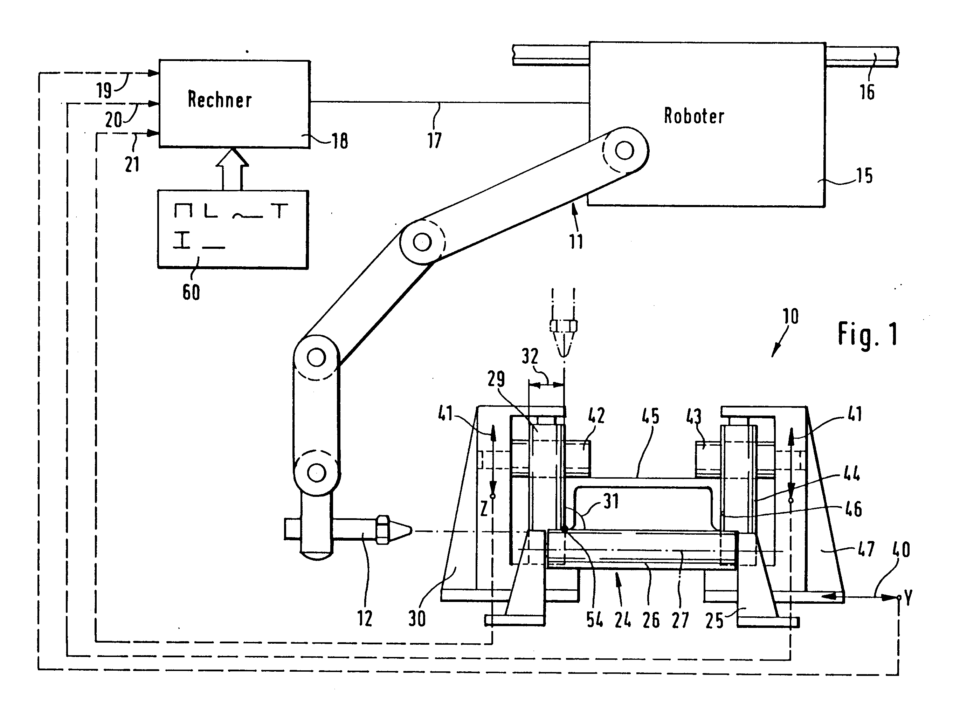

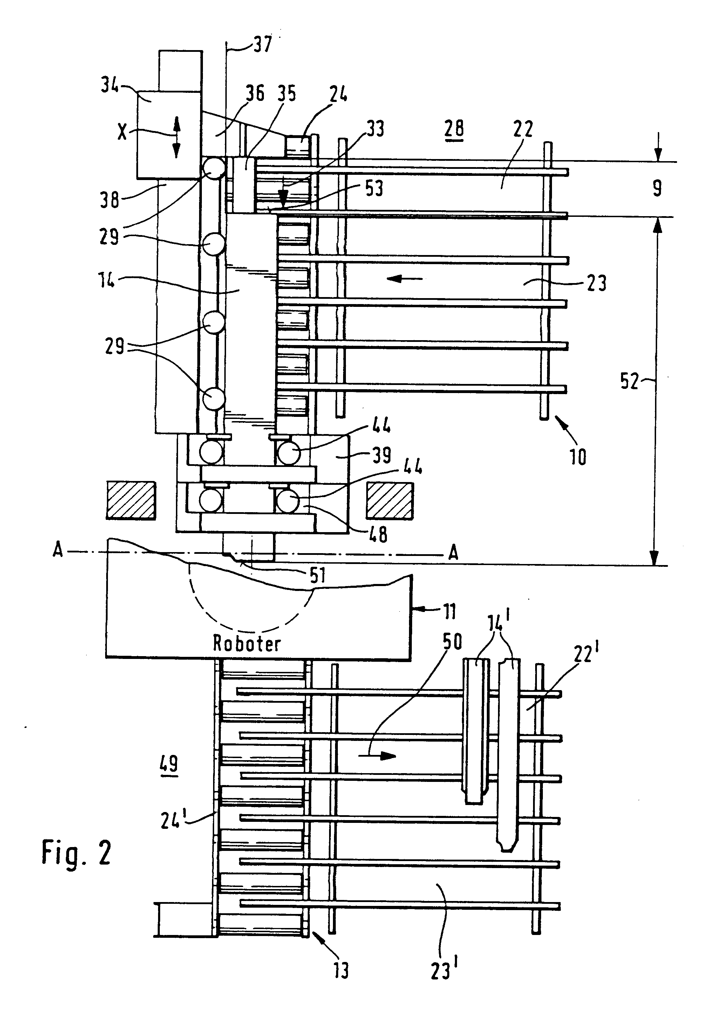

In den Fig. 1 und 2 ist eine Einrichtung zur Festlegung von Schneidpositionen für Profile in ihrer Gesamtheit mit 10 bezeichnet. Die Einrichtung weist eine Profilschneidstation auf, die im wesentlichen aus einem Roboter 11, vorzugsweise Gelenkarmroboter, an dem ein Schneidbrenner 12 befestigt ist und einer Vorrichtung 13 zum Fördern und Positionieren der Profile 14 besteht.

Der Roboter ist als schienengebundene Hängebahn 15 ausgebildet. Hierzu weist der Roboter 11 einen nicht dargestellten elektromotorischen Linearantrieb auf, dessen Bewegung über eine Spindelmutter/Spindel übertragen wird. Linear geführt wird der Roboter durch über der Einrichtung 13 angeordnete Schienen 16. Der Roboter 11 ist über Leitungen 17 an einen Rechner 18 angeschlossen, der über Steuerleitungen 19, 20, 21 mit einer nicht näher dargestellten Wegmeßeinrichtung verbunden ist.

Selbstverständlich kann der Roboter auch in kartesischer Koordinatenbauweise ausgebildet und/oder stationär angeordnet sein.

Die Vorrichtung 13 besteht aus einem Puffertisch 22, der über einen integrierten Querförderer 23, vorzugsweise einem Kettenförderer mit einem Rollengang 24 in Verbindung steht. Der Rollengang 24 besteht im grundsätzlichen Aufbau aus in einem Längsfundament 25 eingelegte Tragrollen 26 mit festen Achsen 27 als Tragelement. Der Abstand der Tragrollen 26 ist hierbei so ausgelegt, daß das Profil mindestens auf zwei Tragrollen aufliegt.

An der oben beschriebenen Profilzuführseite 28 des Rollenganges 24 begrenzen feststehende Anschlagrollen 29 die dem Querförderer 23 entgegengesetzte Längsseite des Rollenganges 24. Vorzugsweise sind die Anschlagrollen 29 in stationär angeordneten Lagertraversen 30 befestigt. Die stationär angeordneten Anschlagrollen 29 und die Tragrollen 26 des Rollenganges 24 bilden einen rechten Winkel 31. Hierzu reichen die Anschlagrollen 29 mit ihrem Durchmesser 32 in den durch die Tragrollen 26 gebildeten Längsförderweg 33 hinein.

Der Profilzuführseite 28 ist weiterhin ein Meßwagen 34 zugeordnet, der auf der dem Querförderer 23 gegenüberliegenden Seite des Rollenganges 24 angeordnet ist. Der Meßwagen 34 weist einen eigenen Antrieb auf, mit dem er linear entsprechend dem Längsförderweg 33, im folgenden X-Richtung genannt, verfahrbar ist. An dem Meßwagen 34 ist ein in den Längsförderweg 33 hineinragender Förderanschlag 35 mittels einer Konsole 36 befestigt. Die Länge 9 des Förderanschlages 35 ist so ausgelegt, daß auch kleine Profilabschnitte bzw. Profilreste in eine noch zu beschreibende Positioniervorrichtung 39 eingeschoben werden konnen. Die Länge 9 entspricht ungefähr dem Abstand zwischen den zwei Meß- und Spannrollen 44 (Fig. 2). Vorzugsweise verfährt der Meßwagen 34 auf einer einen parallel zur X-Tangente 37 der Anschlagrollen 39 verlegten Führung 38.

An den Rollengang 24 der Profilzuführseite 28 schließt sich eine Positioniervorrichtung 39 an, in der das Profil 14 gegen die als Bestimmelemente wirkenden Trag- und Anschlagrollen 26, 29 gespannt wird. Als Spannelemente dienen vorzugsweise horizontal (Pfeilrichtung 40) und vertikal (Pfeilrichtung 41) verfahrbare Spannrollen 42, 43, 44. In der Fig. 1 werden die Spannrollen 42 und 43 in Z-Richtung 41 solange verfahren, bis sie auf der Profiloberfläche 45 mit ihrem Rollenumfang aufliegen und somit das Profil 14 gegen die Tragrollen 26 spannen. Die bewegliche Spannrolle 44 wird in Y-Richtung 40 solange verfahren, bis sie an der Profilseitenfläche 46 anliegt und somit das Profil 14 gegen die Anschlagrollen 29 spannt.

Die Spannrollen 42, 43, 44 sind, wie in der Fig. 1 schematisch dargestellt, in Lagerböcken 47 angeordnet, wobei die in Z-Richtung 41 verfahrbaren Spannrollen 42, 43 in diesen Lagerböcken 47 verfahrbar angeordnet sind. Die Spannrolle 44 hingegen wird durch Verfahren des Lagerbockes 47 in Y-Richtung 40 bewegt.

Selbstverständlich ist es auch möglich, die Spannrollen 42, 43 mittels horizontal und vertikal verfahrbarer Lagerböcke zu positionieren. In einer weiteren Ausbildung werden die Spannrollen 42, 43, 44 mittels Hydraulikzylinder gegen die Profilflächen 45, 46 gespannt. Wie insbesondere auf Fig. 2 ersichtlich, können selbstverständlich auch mehrere Meß-und Spannrollen 42, 43, 44 hintereinander angeordnet werden.

Wie bereits oben erwähnt, sind die Spannrollen unter Zwischenschaltung eines nicht näher dargestellten Wegmeßsystems über die Steuerleitungen 19, 20, 21 mit dem Rechner 18 verbunden. Als Wegmeßsysteme können hierbei magnetische Systeme, wie z. B. Inductosyn, oder Impulsmaßstäbe verwendet werden. Vorzugsweise werden jedoch Winkelgeber zur absoluten Wegmessung der linearen Bewegungen der Spannrollen 42, 43, 44 bzw. des Lagerbockes eingesetzt.

In Richtung des Längsförderweges 33 hinter der Positioniervorrichtung 39 mit der integrierten Meßvorrichtung 48 liegt die fest vorgegebene Meßlinie A - A von der aus geschnitten wird. Die Linie A - A liegt im Arbeitsbereich des Roboters 11, der wie bereits beschrieben, über der Vorrichtung 13, insbesondere uber der Positioniereinrichtung 39 angeordnet ist. Hinter der Linie A - A befindet sich die Profilabführseite 49, die aus einem Rollengang 24 mit angetriebenen Rollen besteht, der ebenfalls über einen nicht näher dargestellten Querförerer 23' mit einem Puffertisch 22' in Wirkverbindung steht. Über den Rollengang 24 und den Querförderer 23' werden die geschnittenen Profile 14' zu dem Puffertisch 22' transportiert. Hierzu hebt der Querförderer 23' im vorderen Bereich des Rollenganges 24' ab und fördert des profil 14' über nicht nächer dargestellte ketten zu dem Puffertisch 22' - (Pfeilrichtung 50).

Die oben beschriebene Vorrichtung 10 arbeitet wir folgt:
Die zu schneidenden Profile 14, die in der Regel zwischen 10 bis 15 m lang sind, werden auf dem integrierten Puffertisch 22 und Querförderer 23 mit einem nicht näher dargestellten Flurförderzeug oder Kran abgelegt. Danach wird das zu schneidende Profil 14, das gemäß Fig. 1 als U-Profil ausgebildet ist, über das Kettensystem des Querförderers 23 in den Rollengang 24 gefördert. Das U-profil 14 liegt hierbei mit seiner offenen Seite auf den Tragrollen 26 des Rollenganges auf. Die ketten des Querförderers 23 laufen bei diesem Fördervorgang solange, bis das Profil 14 an den festen senkrecht stehenden Anschlagrollen 29 anliegt. Dann senkt der Querförderer 23 im vorderen Bereich ab und legt das Profil 14 auf den Tragrollen 26 des Rollenganges 24 ab. Dabei ist das Profil 14 durch die Tragrollen 26 und die Anschlagrollen 29 in seiner Lage bestimmt.

Handelt es sich bei dem zu schneidenden Profil 14 um ein symmetrisch aufgebautes Profil, wie ein Flach-, U-, Doppel-T-, oder Wulstprofil, so schiebt der Meßwagen 34 das Profil 14 in X-Richtung 33 sofort mit seinem Anfang 51 über die Meßlinie A - A in eine erste Schneidposition.

Dem Antrieb des Meßwagens 34 wird hierbei zur Positionierung des Profils 14 in die erste Schneidposition die absolute Profillänge 52 vorgeben. Dies ist vorteilhaft dadurch möglich, daß die verwendeten Profile 14 beispielsweise eine Länge von 10,5 m haben und aus einem Profil Profilabschnitte mit jeweils 2 m Länge geschnitten werden.

Durch die Vorgabe von beispielsweise 10 m verfährt der Meßwagen 34 ausgehend von einer fest vorgegebenen Parkposition das Profil derart in X-Richtung 33, daß die Profillänge zwischen Meßlinie A - A und Profilende 53 10 m beträgt.

Passiert der Profilanfang 51 die Positionier- und Meßvorrichtung 39, 48, so fährt die erste Meß- und Spannrolle 44 in Y-Richtung 40 auf Spanndruck. Danach fahren gleichzeitig die Meß- und Spannrolle 42 auf der festen Anschlagseite und die Meß- und Spannrolle 43 auf der beweglichen Spannseite in Z-Richtung 41 auf Spanndruck.

Vorzugsweise ist die Rolle 43 nur als Spannrolle ausgebildet, Hierbei ist, wie bereits oben beschrieben, jeder Rolle 42, 43, 44 und/oder jedem Lagerbock 47 ein Weggeber für die absolute Messung der Linearbewegung zugeordnet. Die Weggeber sind in einem festen Abstand zum Maschinennullpunkt 54 (Fig. 1) derart eingestellt, daß die Meß- und Spannrollen 42, 43, 44 und/oder die Lagerböcke 47 immer von einem fest vorgegebenen Null-Referenzpunkt aus verfahren.

In der Fig. 1 ist der an dem Roboter 11 befestigte Schneidbrenner 12 schematisch in Anschnittstellung an dem Maschinennullpunkt 54 dargestellt. Hierbei wurde aus Übersichtsgründen der Schneidbrenner 12 in einem größeren Abstand zum Nullpunkt 54 dargestellt.

Selbstverständlich ist es auch möglich, den Schneidbrenner 12 auf einen beliebigen Anschnittpunkt an der Werkstückkontur zu programmieren.

Die so ermittelten Meßwerte werden dem übergeordneten Rechner 18 gemeldet, der die Variablen der vorher programmierten Schnittform bzw. die Werkstückkontur, die in der Fig. 1 durch Symbole 60 dargestellt sind, durch die gemessenen numerischen Werte bestimmt und dem Roboter 11 weitergemeldet. Der Roboter verfügt so nach dem Meßvorgang über die exakte geometrische Form des zu schneidenden Teils.

Nach dem Spann-/Meßvorgang führt der Roboter 11 den ihm vorgegebenen Schnitt im Bereich der Meßlinie A - A aus. Hierbei wird der Schneidbrenner 12 entsprechend der gemessenen Werkstückkontur und dem als Makro oder Unterprogramm in dem Rechner 18 abgelegten Schneidbild geführt.

Unter Schneidbild werden hierbei die im Fertigungsprogramm vorkommenden, von einem linearen Trennschnitt abweichenden Schneidoperationen verstanden, wie z. B. Nahtvorbereitungsschnitte, Schrägschnitte, Ausschnitte, Kreisschnitte usw.

Darauf folgt die Positionierung des Profils 14 über den Meßwagen 34 in X-Richtung 33. Dabei wird entsprechend dem obigen Beispiel das Profil 14 zwei Meter weiter bewegt.

Dabei brauchen die Meß- und Spannrollen 42, 43, 44 während dieser Längenpositionierung nicht zurückgefahren werden; somit verfügt der Rechner 18 sofort nach dem Stoppen des Längsantriebes bereits wieder über die aktuelle Werkstückkontur bzw. Schnittform des Profiles 14 für den nächsten Schnitt.

Vorteilhaft wird durch die jeweilige Messung der Werkstückkontur eine schnelle und genaue Positionierung des Schneidbrenners 12 auch bei großen Werkstücktoleranzen ermöglicht. Hierbei wird eine Positioniergenauigkeit von kleiner +/- 0,5 mm erreicht, die insbesondere beim Anschneiden mit einem Autogenschneidbrenner und dem hierbei erforderlichen Heizvorgang zu einem fehlerhaften und sauberen Anschnitt führt.

Nach dem zweiten Schnitt wird das fertig geschnittene Profil 14' über den Rollengang 24' zu dem abführseitigen Querförderer 23' gebracht. Von diesem werden dann die fertigen Profile, wie bereits beschrieben, zu dem Puffertisch 22' gefördert.

## Patentansprüche

1. Einrichtung (10) zur Festlegung von Schneidpositionen für Profile (14), wie Wulstprofile, I-Profile und ähnliche stabförmige Werkstücke, in einer Profilschneidstation (10) mit einer Vorrichtung (13) zum Positionieren und Fördern von Profilen (14), die einem Rollengang (24) aufweist mit einer Steuerung und einem Schneidbrenner (12),
dadurch gekennzeichnet,
daß die Vorrichtung (13) ein Meßwagen (34) ist, der linear entlang ihres Längsförderweges (33) verfahrbar ist und das Profil (14) in seiner X-Richtung auf dem Rollengang (24) in Bezug auf die Profilschneidstation bewegt und positioniert.

2. Einrichtung nach Anspruch 1,
dadurch gekennzeichnet,
daß der Meßwagen (34) einen Antrieb aufweist und entlang einer in X-Richtung verlaufenden Führung (38) verfahrbar ist.

3. Einrichtung nach Anspruch 1 oder 2,
dadurch gekennzeichnet,
daß der Meßwagen (34) das Profil (14) mit vorgegebener Länge in X-Richtung über eine vorgegebene Meßlinie A-A fördert.

## Claims

1. Apparatus (10) for establishing cutting positions for sections (14), such as bulb angles, I-sections and similar bar-shaped workpieces, in a section-cutting station (10) having a device (13) for positioning and conveying sections (14), which section-cutting station (10) has a roller conveyor (24) having a control system and a cutting torch (12), characterized in that the device (13) is a measuring carriage (34) which is traversable in a linear manner along its longitudinal conveying path (33) and moves and positions the section (14) in its X-direction on the roller conveyor (24) with regard to the section-cutting station.

2. Apparatus according to Claim 1, characterized in that the measuring carriage (34) has a drive and is traversable along a guide (38) running in the X-direction.

3. Apparatus according to Claim 1 or 2, characterized in that the measuring carriage (34) conveys the section (14) with predetermined length in the X-direction over a predetermined measuring line A-A.

**Revendications**

1. Installation (10) pour fixer les positions de coupe de profilés (14) tels que des profilés à boudin, des profilés en I et des pièces d'oeuvre analogues en forme de barreau, dans une station de coupe de profilés (10) avec un dispositif (13) pour le positionnement et le transport des profilés (14), dispositif qui comporte un chemin à rouleaux (24) avec une commande et un chalumeau de coupe (12), installation caractérisée en ce que le dispositif (13) est un chariot de mesure (34) qui est susceptible d'être déplacé linéairement le long de son trajet de transport longitudinal (33) et qui déplace et positionne le profilé (14) dans sa direction (X) sur le chemin à rouleaux (24) par rapport à la station de profilés.

2. Installation selon la revendication 1, caractérisée en ce que le chariot de mesure (34) comporte un entraînement et est susceptible d'être déplacé le long d'un guidage (38) s'étendant en direction X.

3. Installation selon la revendication 1 ou la revendication 2, caractérisée en ce que le chariot de mesure (34) transporte le profilé (14) selon une longueur prédéfinie en direction X au-delà d'une ligne de mesure prédéfinie A-A.

Fig. 1

Rechner

Roboter

EP 0 285 746 B1

Fig. 2